# EUROPEAN PATENT APPLICATION

(11) **EP 4 149 146 A1**
(43) Date of publication of application: **15.03.2023**
(21) Application number: 20934677.4
(22) Date of filing: 08.05.2020
(51) Int. Cl.: H04W 16/28, H04W 72/04, H04L 5/00

(54) **UPLINK SENDING METHOD, APPARATUS, AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2020/089211
(87) International publication number: WO 2021/223221

(57) **Abstract**

Disclosed are an uplink sending method, apparatus and device, and a storage medium, which relate to the technical field of communications. The method is applied to a terminal device, and comprises: receiving an RRC message sent by a network device, wherein the RRC message is used for indicating an uplink beam information set, and a plurality of pieces of uplink beam information in the uplink beam information set correspond to the same or different antenna panels of a terminal device; receiving first downlink signaling sent by the network device; determining target uplink beam information from the uplink beam information set according to an uplink beam information domain carried in the first downlink signaling; and determining an uplink sending beam direction corresponding to the target uplink beam information to be a target uplink sending beam direction, wherein the uplink beam information domain corresponds to one or more pieces of target uplink beam information.

## Description

### TECHNICAL FIELD

The disclosure relates to a field of communication technologies, and particularly to an uplink sending method, an uplink sending apparatus, a device and a storage medium.

### BACKGROUND

In new radio (NR), especially when a communication frequency band is in frequency range 2, since a high-frequency channel attenuates quickly, it is necessary to use beam-based transmission and reception to ensure coverage.

For beam-based physical uplink shared channel (PUSCH) transmission, a network device uses a sounding reference signal resource indication (SRS resource indication) field in a downlink control information (DCI) signaling to indicate the uplink sending beam direction, that is, the uplink sending beam direction of the PUSCH is the same as the sending beam of a sounding reference signal (SRS) indicated by spatial relation information (spatialrelationinfo) corresponding to the SRS resource indication, or the same as the sending beam corresponding to the receiving beam of a synchronization signal block (SSB) or a non-zero power channel state information reference signal (CSI-RS) indicated by the spatial relation information corresponding to the SRS resource indication.

In related technologies, the SRS resource indication can only indicate one uplink sending beam direction, while the future multiple-input multiple-output (MIMO) technology requires a terminal device to support a dynamic switching of more beams on multiple antenna panels, i.e., multiple beam directions are required for sending or receiving. However, the related technologies do not provide a suitable solution.

### SUMMARY

Embodiments of the disclosure provide an uplink sending method, an uplink sending apparatus, a device and a storage medium, which introduces a radio resource control (RRC) message configured to indicate an uplink beam information set, and uplink beam information in the uplink beam information set corresponds to a same antenna panel or different antenna panels of a terminal device, thus can adapt to a dynamic switching of more beams on multiple antenna panels. The technical solution will be described as follows.

According to an aspect of embodiments of the disclosure, an uplink sending method is provided. The method includes receiving a radio resource control (RRC) message sent by a network device, in which the RRC message is configured to indicate an uplink beam information set, and a plurality of pieces of uplink beam information in the uplink beam information set correspond to a same antenna panel or different antenna panels of a terminal device; receiving a first downlink signaling sent by the network device, in which the first downlink signaling carries an uplink beam information field, and the uplink beam information field corresponds to one piece or a plurality of pieces of target uplink beam information; determining target uplink beam information in the uplink beam information set based on the uplink beam information field carried by the first downlink signaling; and determining an uplink sending beam direction corresponding to the target uplink beam information as a target uplink sending beam direction.

According to an aspect of embodiments of the disclosure, an uplink sending method is provided. The method includes sending a radio resource control (RRC) message to a terminal device, in which the RRC message is configured to indicate an uplink beam information set, and a plurality of pieces of uplink beam information in the uplink beam information set correspond to a same antenna panel or different antenna panels of the terminal device; and sending a first downlink signaling to the terminal device. The first downlink signaling carries an uplink beam information field, the uplink beam information field is configured to determine target uplink beam information in the uplink beam information set, and the uplink beam information field corresponds to one piece or a plurality of pieces of target uplink beam information.

According to an aspect of the embodiments of the disclosure, an uplink sending apparatus is provided. The apparatus includes a receiving module and a determining module. The receiving module is configured to receive a radio resource control (RRC) message sent by a network device, in which the RRC message is configured to indicate an uplink beam information set, and a plurality of pieces of uplink beam information in the uplink beam information set correspond to a same antenna panel or different antenna panels of a terminal device. The receiving module is configured to receive a first downlink signaling sent by the network device, in which the first downlink signaling carries an uplink beam information field, and the uplink beam information field corresponds to one piece or a plurality of pieces of target uplink beam information. The determining module is configured to determine target uplink beam information in the uplink beam information set based on the uplink beam information field carried by the first downlink signaling. The determining module is configured to determine an uplink sending beam direction corresponding to the target uplink beam information as a target uplink sending beam direction.

According to an aspect of the embodiments of the disclosure, an uplink sending apparatus is provided. The apparatus includes a sending module. The sending module is configured to send a radio resource control (RRC) message to a terminal device, in which the RRC message is configured to indicate an uplink beam information set, and a plurality of pieces of uplink beam information in the uplink beam information set correspond to a same antenna panel or different antenna panels of the terminal device. The sending module is configured to send a first downlink signaling to the terminal device. The first downlink signaling carries an uplink beam information field, the uplink beam information field is configured to determine target uplink beam information in the uplink beam information set, and the uplink beam information field corresponds to one piece or a plurality of pieces of target uplink beam information.

According to an aspect of the embodiments of the disclosure, a terminal device is provided. The terminal device includes a processor; a transceiver coupled to the processor; and a memory configured to store instructions executable by the processor. The processor is configured to load and execute the instructions to perform the uplink sending method described in any of the above aspects.

According to an aspect of the embodiments of the disclosure, a network device is provided. The network device includes a processor; a transceiver coupled to the processor; and a memory configured to store instructions executable by the processor. The processor is configured to load and execute the instructions to perform the uplink sending method described in any of the above aspects.

According to an aspect of the embodiments of the disclosure, a computer-readable storage medium having executable instructions stored therein is provided. The executable instructions are loaded and executed by a processor to perform the uplink sending method described in any of the above aspects.

The technical solution provided in the embodiment of the disclosure at least include the following beneficial effects.

The uplink beams in the uplink beam set indicated by the RRC message sent by the network device may correspond to multiple antenna panels of the terminal device, so that subsequently the terminal device may determine the target uplink beam information in the uplink beam set based on an indication of the uplink beam information filed in the DCI signaling, and the uplink sending is performed on the target uplink sending beam direction corresponding to the target beam information through one or more antenna panels of the terminal device, to adapt to a dynamic switching of more beams on multiple antenna panels.

### BRIEF DESCRIPTION OF THE DRAWINGS

To illustrate the solutions according to the embodiments of the present disclosure or in the prior art more clearly, accompanying drawings needed for describing the embodiments or the prior art are briefly introduced below. Obviously, the accompanying drawings in the following descriptions are merely some embodiments of the present disclosure, and persons of ordinary skill in the art may obtain other drawings according to the accompanying drawings without making creative efforts.
FIG. 1 is a schematic diagram illustrating a communication system according to an embodiment.
FIG. 2 is a schematic diagram illustrating PUSCH uplink sending according to an embodiment.
FIG. 3 is a flowchart illustrating an uplink sending method according to an embodiment.
FIG. 4 is a flowchart illustrating an uplink sending method according to an embodiment.
FIG. 5 is a flowchart illustrating an uplink sending method according to an embodiment.
FIG. 6 is a flowchart illustrating an uplink sending method according to an embodiment.
FIG. 7 is a flowchart illustrating an uplink sending method according to an embodiment.
FIG. 8 is a block diagram illustrating an uplink sending apparatus according to an embodiment.
FIG. 9 is a block diagram illustrating an uplink sending apparatus according to an embodiment.
FIG. 10 is a block diagram illustrating a communication device according to an embodiment.

### DETAILED DESCRIPTION

To illustrate the purposes, the solutions and the advantages of the present disclosure more clearly, the embodiments of the disclosure are further described below with reference to the accompanying drawings.

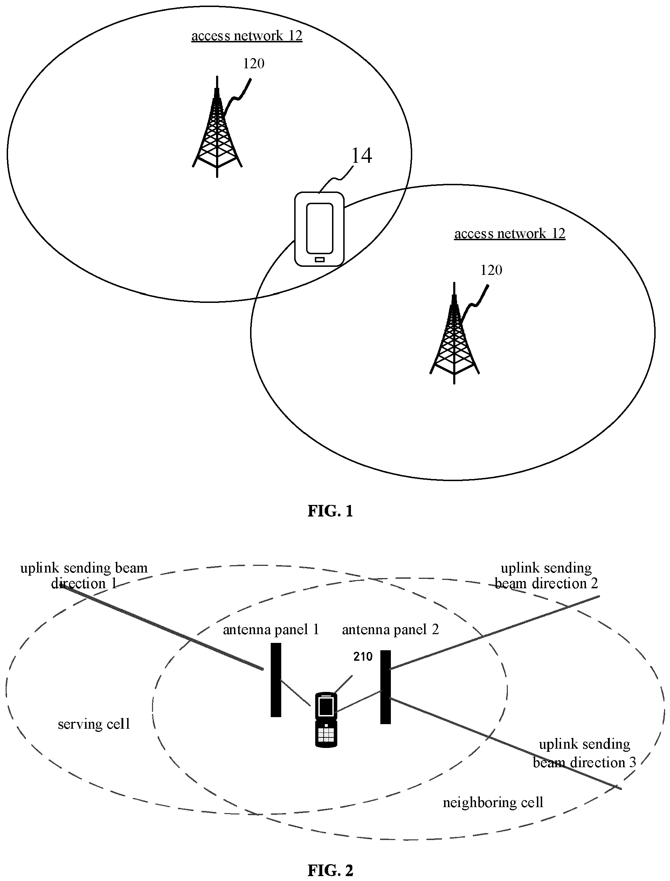

FIG. 1 is a schematic diagram illustrating a communication system according to an embodiment. The mobile communication system may include an access network 12 and a terminal device 14.

The access network 12 includes several access network devices 120. The access network device 120 may be a base station, which is a device deployed in the access network to provide a wireless communication function for the terminal. The base station may include various types of base stations, such as a macro base station, a micro base station, a relay station, an access point, etc. In systems using different wireless access technologies, the device with the function of the base station may be designated differently, for example, eNodeB or eNB in the LTE system, gNodeB or gNB in the 5G NR-U system. With the evolution of communication technology, the designation "base station" may be changed. For ease of description, in the embodiments of the present disclosure, the above devices for providing the wireless communication function to the terminal device 14 are collectively called "access network device".

The terminal device 14 may include various forms of devices with the wireless communication function, such as a handheld device, a vehicle-mounted device, a wearable device, a computing device or other processing devices connected to a Modem, and various forms of user equipment (UE), mobile station (MS), terminal device and so on. For ease of description, in the embodiments of the present disclosure, the above devices are collectively called "terminal". The access network device 120 and the terminal device 14 communicate with each other through an air interface technology, such as via the Uu interface.

The technical solution of the embodiments of the disclosure can be applied to various communication systems, such as Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced long Term Evolution (LTE-A) system, New Radio (NR) system, NR system evolution system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Networks (WLAN), Wireless Fidelity (WiFi), next-generation communication system or other communication systems, etc.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, and vehicle to everything (V2X) system, etc. The embodiments of the disclosure can also be applied to these communication systems.

FIG. 2 shows a schematic diagram of PUSCH uplink sending provided by an embodiment of the disclosure.

The terminal device 210 is in a serving cell and also in a neighboring cell.

The terminal device 210 is provided with at least one antenna panel. Different antenna panels may have different orientations, so that beams on different transmission directions can be sent and received, thereby realizing multi-space diversity. As illustrated in FIG. 2, the terminal device 210 has two antenna panels: antenna panel 1 and antenna panel 2.

The terminal device 210 supports uplink sending through one or more antenna panels at a same time point. For example, the terminal device supports uplink sending through only one antenna panel at the same time point: the terminal device controls the antenna panel 1 to perform uplink sending on an uplink sending beam direction 1. For example, the terminal device supports uplink sending through both antenna panels at the same time point: the terminal device controls the antenna panel 1 to perform uplink sending on the uplink sending beam direction 1, and controls the antenna panel 2 to perform uplink sending on an uplink sending beam direction 2.

One antenna panel corresponds to one or more uplink beam directions. For example, the antenna panel 2 corresponds to the uplink sending beam direction 2 at time point 1 and corresponds to an uplink sending beam direction 3 at time point 2.

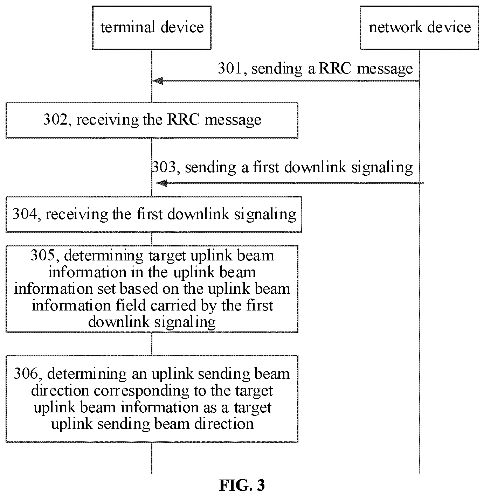

FIG. 3 is a flowchart illustrating an uplink sending method according to an embodiment. The method is applied in the terminal device and the network device as shown in FIG. 1. The method includes the following.

At block 301, the network device sends a radio resource control (RRC) message to the terminal device.

The RRC message is configured to indicate an uplink beam information set, and a plurality of pieces of uplink beam information in the uplink beam information set correspond to a same antenna panel or different antenna panels of a terminal device.

The uplink beam information set includes at least two pieces of uplink beam information. For example, the uplink beam information set includes: uplink beam information 1, uplink beam information 2. The uplink beam information 1 and the uplink beam information 2 both correspond to the antenna panel 1 of the terminal device. For example, the uplink beam information set includes: uplink beam information 1, uplink beam information 2, and uplink beam information 3. The uplink beam information 1 corresponds to the antenna panel 1 of the terminal device, and the uplink beam information 2 and the uplink beam information 3 correspond to the antenna panel 2 of the terminal device.

Optionally, the uplink beam information includes any one of spatial relation information (spatial relation info), a transmission configuration indication (TCI) state, and an uplink TCI state.

At block 302, the terminal device receives the RRC message.

The terminal device determines the uplink beam information set according to the received RRC message.

In an example, uplink beam information in the uplink beam information set corresponds to at least two antenna panels. In other words, in the uplink beam information set, there are at least two pieces of uplink beam information corresponding to different antenna panels.

At block 303, the network device sends a first downlink signaling to the terminal device.

The first downlink signaling includes several information fields, one of which is an uplink beam information field. The embodiment of the disclosure does not limit a specific format of the first downlink signaling.

The first downlink signaling includes, but is not limited to one of a DCI signaling and a MAC signaling. When the first downlink signaling is the DCI signaling, the uplink beam information field is configured to indicate an uplink beam of PUSCH. When the first downlink signaling is the MAC signaling, the uplink beam information field is configured to indicate an uplink beam of a physical uplink control channel (PUCCH).

At block 304, the terminal device receives the first downlink signaling.

At block 305, the terminal device determines target uplink beam information in the uplink beam information set based on the uplink beam information field carried by the first downlink signaling.

The uplink beam information field corresponds to one or more pieces of target uplink beam information.

Optionally, a value of the uplink beam information field is called a code point. For example, for a 1-bit uplink beam information field, it includes two code points: 0 and 1. The uplink beam information field corresponds to one or more pieces of target uplink beam information, which means that each code point in all code points of the uplink beam information field corresponds to one or more pieces of target uplink beam information.

For example, the uplink beam information field includes 3 bits. Code point 000 corresponds to one piece of uplink beam information: uplink beam information 0. Code point 001 corresponds to 2 pieces of uplink beam information: uplink beam information 2 and uplink beam information 3.

The terminal device determines the uplink beam information field in the first downlink signaling, and then determines the target uplink beam information corresponding to a codepoint in the uplink beam information set according to the codepoint of the uplink beam information field.

At block 306, the terminal device determines an uplink sending beam direction corresponding to the target uplink beam information as a target uplink sending beam direction.

One piece of target uplink beam information corresponds to one uplink sending beam direction. Optionally, after determining (one or more pieces of) target uplink beam information, the terminal device determines (one or more) uplink sending beam direction(s) corresponding to the above uplink beam information as (one or more) target uplink sending beam direction(s). If the terminal device supports uplink transmission through only one antenna panel at the same time point, the antenna panel performs uplink transmission on one determined target uplink sending beam direction. If the terminal device supports uplink transmission through multiple antenna panels at the same time point, then the multiple antenna panels perform uplink transmission on their respective target uplink sending beam directions.

For example, the target uplink beam information is the spatial relationship information. The target uplink sending beam direction is the same as the sending beam direction of an SRS indicated by the spatial relationship information, or the same as the sending beam direction corresponding to a receiving beam of an SSB indicated by the spatial relationship information, or the same as the sending beam direction corresponding to a receiving beam of a non-zero power CSI-RS indicated by the spatial relationship information.

For example, the target uplink beam information is the (uplink) TCI state. The target uplink sending beam direction is the same as the sending beam direction of an SRS indicated by the (uplink) TCI state, or the same as the sending beam direction corresponding to a receiving beam of an SSB indicated by the (uplink) TCI state, or the same as the sending beam direction corresponding to a receiving beam of a non-zero power CSI-RS indicated by the (uplink) TCI state.

In summary, in the method provided in the embodiment, the uplink beams in the uplink beam set indicated by the RRC message sent by the network device may correspond to multiple antenna panels of the terminal device, so that subsequently the terminal device may determine the target uplink beam information in the uplink beam set based on an indication of the uplink beam information filed in the first downlink signaling, and the uplink sending is performed on the target uplink sending beam direction corresponding to the target beam information through one or more antenna panels of the terminal device, to adapt to a dynamic switching of more beams on multiple antenna panels.

In an optional embodiment based on FIG. 3, the following three scenarios are included.

Scenario 1: The terminal device supports uplink sending through only one antenna panel at the same time point, and the uplink beam information field corresponds to one piece of target uplink beam information.

Scenario 2: The terminal device supports uplink sending through only one antenna panel at the same time point, and the uplink beam information field corresponds to one or more pieces of target uplink beam information.

Scenario 3: The terminal device supports uplink sending through one or more antenna panels at the same time point, and the uplink beam information field corresponds to one or more pieces of target uplink beam information.

It should be noted that in the above three scenarios, the first downlink signaling is an MAC signaling or a DCI signaling.

Case 1: The first downlink signaling is a DCI signaling.

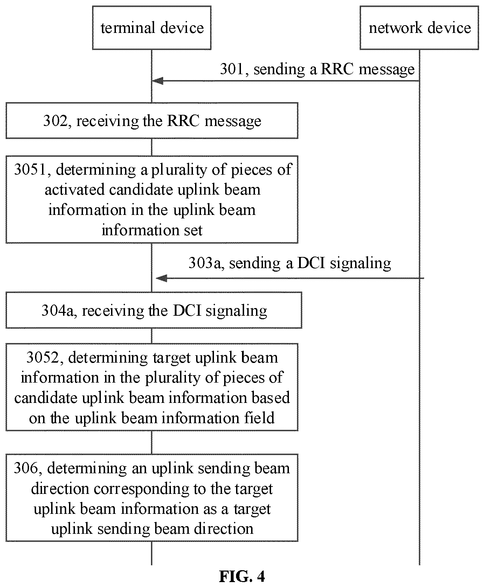

For scenario 1, refer to FIG. 4. FIG. 4 shows a flowchart of an uplink sending method provided by an embodiment of the disclosure, which is applied to the terminal device and the network device as shown in FIG. 1.

In the embodiment, the terminal device supports uplink sending through only one antenna panel at the same time point, the uplink beam information field corresponds to one piece of target uplink beam information, and the first downlink signaling is a DCI signaling. In the embodiment, block 305 is replaced by blocks 3051 and 3052.

At block 301, the network device sends a RRC message to the terminal device.

At block 302, the terminal device receives the RRC message.

Optionally, the uplink beam information in the uplink beam information set carries an indication identifier, and the indication identifier is configured to indicate an antenna panel corresponding to the uplink beam information. The indication identifier includes at least one of: a cell ID, a transmission reception point (TRP) ID, an antenna panel ID, a reference signal resource or resource set ID.

For example, the indication identifier includes the cell ID. In the case that each cell has only one antenna panel, the corresponding antenna panel can be determined according to the cell ID. The cell ID can be a cell ID of the serving cell or a cell ID of the neighboring cell.

For example, the indication identifier includes the TRP ID. In the case that each TRP has only one antenna panel, the corresponding antenna panel can be determined according to the TRP ID.

For example, the indication identifier includes the antenna panel ID. The antenna panel ID is configured to uniquely identify one antenna panel, and the corresponding antenna panel can be determined according to the antenna panel ID. The antenna panel ID can be an antenna panel ID on the network device side or an antenna panel ID on the terminal device side. When the antenna panel ID is an antenna panel ID on the network device side, the control resource set (CORESET) ID can also be used.

For example, the indication identifier includes the reference signal resource ID or resource set ID. The reference signal resource ID or resource set ID is configured to distinguish antenna panels. In the case that each cell (or TRP) has only one antenna panel, the reference signal resource ID or resource set ID can also be used to distinguish the cells (or TRPs). According to the reference signal resource ID or resource set ID, the corresponding antenna panel can be determined.

At block 3051, the terminal device determines a plurality of pieces of activated candidate uplink beam information in the uplink beam information set.

For the uplink beam information in the uplink beam information set, the terminal activates all or part of the uplink beam information, and uses the activated uplink beam information as candidate uplink beam information.

In an optional embodiment, determining a plurality of pieces of activated candidate uplink beam information in the uplink beam information set includes: in response to a number of the plurality of pieces of uplink beam information in the uplink beam information set being less than or equal to M, determining all the uplink beam information in the uplink beam information set as candidate uplink beam information, where M is a positive number; in response to the number of the plurality of pieces of uplink beam information in the uplink beam information set being greater than M, receiving a MAC signaling and activating M pieces of uplink beam information in the uplink beam information set as candidate uplink beam information based on the MAC signaling.

For example, M is 8. If the number of the plurality of pieces of uplink beam information in the uplink beam information set is 6, all 6 pieces of uplink beam information are activated and determined as the candidate uplink beam information; if the number of the plurality of pieces of uplink beam information in the uplink beam information set is 10, 8 pieces of uplink beam information are activated according to the MAC signaling, and the activated 8 pieces of uplink beam information are determined as the candidate uplink beam information.

At block 303a, the network device sends a DCI signaling to the terminal device.

At block 304a, the terminal device receives the DCI signaling.

At block 3052, the terminal device determines target uplink beam information in the plurality of pieces of candidate uplink beam information based on the uplink beam information field in the DCI signaling.

The DCI signaling directly indicates one piece of candidate uplink beam information among all the candidate uplink beam information as the target uplink beam information, and provides the target uplink beam information to the terminal device.

Optionally, the terminal device renumbers the activated multiple pieces of candidate uplink beam information sequentially starting from 0. Each code point in the uplink beam information field corresponds to one piece of renumbered candidate uplink beam information.

For example, the eight pieces of candidate uplink beam information activated by MAC signaling are: candidate uplink beam information #3, candidate uplink beam information #8, candidate uplink beam information #13, candidate uplink beam information #15, candidate uplink beam information #16, candidate uplink beam information #19, candidate uplink beam information #21, candidate uplink beam information #23. The 8 pieces of candidate uplink beam information are renumbered from 0 to 7, that is, candidate uplink beam information #3 becomes candidate uplink beam information #0 (corresponding to code point 000), and candidate uplink beam information #8 becomes candidate uplink beam information #1 (corresponding to code point 001), candidate uplink beam information #13 becomes candidate uplink beam information #2 (corresponding to code point 010), candidate uplink beam information #15 becomes candidate uplink beam information #3 (corresponding to code Point 011), candidate uplink beam information #16 becomes candidate uplink beam information #4 (corresponding to code point 100), candidate uplink beam information #19 becomes candidate uplink beam information #5 (corresponding to code point 101), candidate uplink The beam information #21 becomes the candidate uplink beam information #6 (corresponding to the code point 110), and the candidate uplink beam information #23 becomes the candidate uplink beam information #7 (corresponding to the code point 111).

At block 306, the terminal device determines an uplink sending beam direction corresponding to the target uplink beam information as a target uplink sending beam direction.

Since the uplink beam information field corresponds to one piece of target uplink beam information, the terminal device can determine one target uplink sending beam direction. When the terminal device supports uplink sending through only one antenna panel at the same time point, the terminal device uses the target uplink sending beam direction as a sending beam direction of the antenna panel 1 (the antenna panel that is performing uplink sending).

In conclusion, in the method provided in the embodiment, when the first downlink signaling is the DCI signaling, when the terminal device supports uplink sending through only one antenna panel at the same time point, the uplink beam information field corresponds to one piece of target uplink beam information, so that the terminal device can determine one piece of target uplink beam information from the uplink beam information set given in the RRC message according to the uplink beam information field, and use the uplink sending beam direction corresponding to the target uplink beam information as the uplink sending beam direction of the antenna panel.

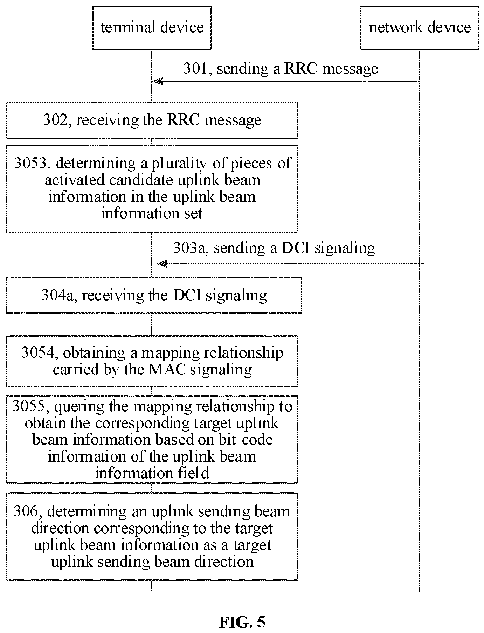

For scenario 2 and scenario 3, refer to FIG. 5. FIG. 5 shows a flowchart of an uplink sending method provided by an embodiment of the present disclosure, which is applied to the terminal equipment and the network equipment as shown in Fig. 1.

In the embodiment, the terminal device supports uplink sending through one or more antenna panels at the same time point, the uplink beam information field corresponds to one or more pieces of target uplink beam information, and the first downlink signaling is a DCI signaling. In the embodiment, block 305 is replaced by blocks 3053 and 3055.

At block 301, the network device sends a RRC message to the terminal device.

At block 302, the terminal device receives the RRC message.

Optionally, the uplink beam information in the uplink beam information set carries an indication identifier, and the indication identifier is configured to indicate an antenna panel corresponding to the uplink beam information. The indication identifier includes at least one of: a cell ID, a transmission reception point (TRP) ID, an antenna panel ID, a reference signal resource or resource set ID.

For example, the indication identifier includes the cell ID. In the case that each cell has only one antenna panel, the corresponding antenna panel can be determined according to the cell ID. The cell ID can be a cell ID of the serving cell or a cell ID of the neighboring cell.

For example, the indication identifier includes the TRP ID. In the case that each TRP has only one antenna panel, the corresponding antenna panel can be determined according to the TRP ID. For example, the indication identifier includes the antenna panel ID. The antenna panel ID is configured to uniquely identify one antenna panel, and the corresponding antenna panel can be determined according to the antenna panel ID. The antenna panel ID can be an antenna panel ID on the network device side or an antenna panel ID on the terminal device side. When the antenna panel ID is an antenna panel ID on the network device side, the control resource set (CORESET) ID can also be used.

For example, the indication identifier includes the reference signal resource ID or resource set ID. The reference signal resource ID or resource set ID is configured to distinguish antenna panels. In the case that each cell (or TRP) has only one antenna panel, the reference signal resource ID or resource set ID can also be used to distinguish the cells (or TRPs). According to the reference signal resource ID or resource set ID, the corresponding antenna panel can be determined.

At block 3053, the terminal device determines a plurality of pieces of activated candidate uplink beam information in the uplink beam information set.

For the uplink beam information in the uplink beam information set, the terminal activates all or part of the uplink beam information, and uses the activated uplink beam information as candidate uplink beam information.

Optionally, the activated uplink beam information corresponds to different antenna panels. For example, 8 pieces of candidate uplink beam information are activated, four pieces corresponding to the antenna panel 1 and the other four pieces corresponding to the antenna panel 2.

In an optional embodiment, determining a plurality of pieces of activated candidate uplink beam information in the uplink beam information set includes: in response to a number of the plurality of pieces of uplink beam information in the uplink beam information set being less than or equal to M, determining all the uplink beam information in the uplink beam information set as candidate uplink beam information, where M is a positive number; in response to the number of the plurality of pieces of uplink beam information in the uplink beam information set being greater than M, receiving a MAC signaling and activating M pieces of uplink beam information in the uplink beam information set as candidate uplink beam information based on the MAC signaling.

For example, M is 8. If the number of the plurality of pieces of uplink beam information in the uplink beam information set is 6, all 6 pieces of uplink beam information are activated and determined as the candidate uplink beam information; if the number of the plurality of pieces of uplink beam information in the uplink beam information set is 10, 8 pieces of uplink beam information are activated according to the MAC signaling, and the activated 8 pieces of uplink beam information are determined as the candidate uplink beam information.

Optionally, the terminal device renumbers the activated multiple pieces of candidate uplink beam information sequentially starting from 0.

For example, the four pieces of candidate uplink beam information activated by MAC signaling are: candidate uplink beam information #3, candidate uplink beam information #8, candidate uplink beam information #13, candidate uplink beam information #15, candidate uplink beam information #18, candidate uplink beam information #20, candidate uplink beam information #26, candidate uplink beam information #29. The 8 pieces of candidate uplink beam information are renumbered from 0 to 7, that is, candidate uplink beam information #3 becomes candidate uplink beam information #0, and candidate uplink beam information #8 becomes candidate uplink beam information #1, candidate uplink beam information #13 becomes candidate uplink beam information #2, candidate uplink beam information #15 becomes candidate uplink beam information #3, candidate uplink beam information #18 becomes candidate uplink beam information #4, candidate uplink beam information #20 becomes candidate uplink beam information #5, candidate uplink The beam information #26 becomes the candidate uplink beam information #6, and the candidate uplink beam information #29 becomes the candidate uplink beam information #7.

At block 303a, the network device sends a DCI signaling to the terminal device.

At block 304a, the terminal device receives the DCI signaling.

At block 3054, the terminal device obtains a mapping relationship carried by the MAC signaling.

The mapping relationship is configured to indicate a correspondence between a codepoint of the uplink beam information field and the candidate uplink beam information.

Optionally, in the case that the terminal device needs a MAC signaling to activate the candidate uplink information, the terminal device receives the MAC signaling sent by the network device before step 3053. In the case that the terminal device does not need a MAC signaling to activate the candidate uplink information, the terminal device receives the MAC signaling sent by the network device before step 3054.

For example, the MAC signaling informs the terminal device of the mapping relationship through a table as shown in Table 1.

**Table 1**

| uplink beam information filed (e.g., 3bit) in DCI | target uplink beam information |
|---|---|
| 000 | uplink beam information #0 |
| 001 | uplink beam information #4 |
| 010 | uplink beam information #1 |
| 011 | uplink beam information #5 |
| 100 | uplink beam information #0 & uplink beam information #4 |
| 101 | uplink beam information #1 & uplink beam information #5 |
| 110 | uplink beam information #2 & uplink beam information #6 |
| 111 | uplink beam information #3 & uplink beam information #7 |

As shown in Table 1, one code point in the uplink beam information field corresponds to one or more pieces of target uplink beam information. For example, when the uplink beam information field is 000, it corresponds to one piece of target uplink beam information: uplink beam information #0. When the uplink beam information field is 111, it corresponds to 2 pieces of target uplink beam information: uplink beam information #3 and uplink beam information #7.

Optionally, each 3-bit sequence of the uplink beam information field in the DCI corresponds to an 8bit in the MAC CE. For example, when the 3bit of the uplink beam information field in the DCI is 000, it corresponds to the first 8bit in the MAC CE. Each bit of the first 8bit corresponds to one piece of activated uplink beam information. When the bit position is 1, the symbol 000 indicates that the terminal uses the beam direction corresponding to the uplink beam information. When the 3bit of the uplink beam information field in the DCI is 001, it corresponds to the second 8bit in the MAC CE, and so on, at most eight 8bits of the MAC CE are required to indicate the above mapping relationship. Optionally, when the MAC CE activates 16 pieces of uplink beam information at most and the uplink beam information field in the DCI is 4 bit, the MAC CE requires sixteen 16bits to indicate the above mapping relationship.

At block 3055, the terminal device queries the mapping relationship to obtain the corresponding target uplink beam information based on codepoint information of the uplink beam information field.

For example, if the codepoint information of the uplink beam information field is 001, the target uplink beam information is: uplink beam information #4. If the codepoint information of the uplink beam information field is 100, and the target uplink beam information is: uplink beam information #0 and uplink beam information #4.

At block 306, the terminal device determines an uplink sending beam direction corresponding to the target uplink beam information as a target uplink sending beam direction.

When the terminal device supports uplink sending through only one antenna panel at the same time point, determining the uplink sending beam direction corresponding to the target uplink beam information as the target uplink sending beam direction includes: in response to there being one piece of target uplink beam information, determining the uplink sending beam direction corresponding to the target uplink beam information as the target uplink sending beam direction; in response to there being a plurality of pieces of target uplink beam information, determining one or more uplink sending beam directions corresponding to one or more pieces of the plurality of pieces of target uplink beam information as one or more target uplink sending beam directions; in which the plurality of pieces of target uplink beam information correspond to different time domain resources.

For example, if the codepoint information of the uplink beam information field is 110, the target uplink beam information is: uplink beam information #2 and uplink beam information #6. Since there is only one antenna panel for sending at the same time point, the uplink beam information #2 and the uplink beam information #6 correspond to different time domain resources. The terminal device determines the sending beam direction corresponding to the uplink beam information #2 (or the uplink beam information #6) as the current target uplink sending beam direction of the antenna panel according to the currently used time domain resource.

When the terminal device supports uplink sending through multiple antenna panels at the same time point, determining the uplink sending beam direction corresponding to the target uplink beam information as the target uplink sending beam direction includes: in response to there being one piece of target uplink beam information, determining the uplink sending beam direction corresponding to the target uplink beam information as the target uplink sending beam direction; in response to there being a plurality of pieces of target uplink beam information, determining one or more uplink sending beam directions corresponding to one or more pieces of the plurality of pieces of target uplink beam information as one or more target uplink sending beam directions; in which the plurality of pieces of target uplink beam information correspond to a same time domain resource or different time domain resources. When the terminal device supports uplink sending through two antenna panels at the same time point, the two antenna panels use different target uplink beam directions for simultaneous transmission, and if the number of target uplink sending beam directions indicated is greater than 2, for example, 4, two antenna panels can use two target uplink beam directions for simultaneous transmission at time point T 1, and use the other two target uplink beam directions for simultaneous transmission at time point T2.

For example, if the codepoint information of the uplink beam information field is 110, the target uplink beam information is: uplink beam information #2 and uplink beam information #6. The uplink beam information #2 corresponds to the antenna panel 1, and the uplink beam information #6 corresponds to the antenna panel 2. The terminal device determines both the uplink sending beam directions corresponding to the uplink beam information #2 and the uplink beam information #6 as the target uplink sending beam directions.

Since uplink sending is performed through both the antenna panel 1 and the antenna panel 2 at the same time point, the uplink beam information #2 and the uplink beam information #6 can correspond to the same time domain resource or correspond to different time domain resources (Time Division Multiplex, TDM). When corresponding to the same time domain resource, different frequency domain resources (Frequency Division Multiplex, FDM) can be used, or the same frequency domain resource but different beam directions (Space Division Multiplex, SDM) can be used.

In conclusion, in the method provided in the embodiment, when the first downlink signaling is the DCI signaling, in the case that the terminal device supports uplink sending through only one antenna panel at the same time point, the uplink beam information field corresponds to one or more pieces of target uplink beam information, so that the terminal device can determine one piece of target uplink beam information from the uplink beam information set given in the RRC message according to the uplink beam information field, and use the uplink sending beam direction corresponding to the target uplink beam information as the uplink sending beam direction of the antenna panel.

In the case that the terminal device supports uplink sending through multiple antenna panels at the same time point, the uplink beam information field corresponds to one or more pieces of target uplink beam information, so that the terminal device can determine one or more pieces of target uplink beam information from the uplink beam information set given in the RRC message according to the uplink beam information field, and use the uplink sending beam direction(s) corresponding to the target uplink beam information as uplink sending beam directions of one or more antenna panels.

Case 2: The first downlink signaling is a MAC signaling.

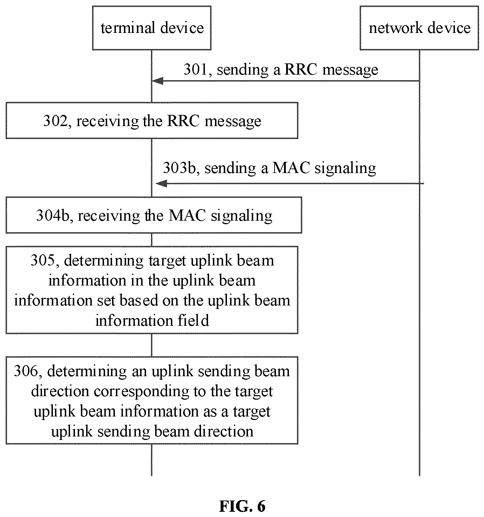

For scenario 1, scenario 2 and scenario 3, refer to FIG. 6. FIG. 6 shows a flowchart of an uplink sending method provided by an embodiment of the present disclosure, which is applied to the terminal equipment and the network equipment as shown in FIG. 1. In the embodiment, the first downlink signaling is a MAC signaling. In the embodiment, the method includes the following.

At block 301, the network device sends a RRC message to the terminal device.

At block 302, the terminal device receives the RRC message.

Optionally, the uplink beam information in the uplink beam information set carries an indication identifier, and the indication identifier is configured to indicate an antenna panel corresponding to the uplink beam information. The indication identifier includes at least one of: a cell ID, a transmission reception point (TRP) ID, an antenna panel ID, a reference signal resource or resource set ID.

For example, the indication identifier includes the cell ID. In the case that each cell has only one antenna panel, the corresponding antenna panel can be determined according to the cell ID. The cell ID can be a cell ID of the serving cell or a cell ID of the neighboring cell.

For example, the indication identifier includes the TRP ID. In the case that each TRP has only one antenna panel, the corresponding antenna panel can be determined according to the TRP ID.

For example, the indication identifier includes the antenna panel ID. The antenna panel ID is configured to uniquely identify one antenna panel, and the corresponding antenna panel can be determined according to the antenna panel ID. The antenna panel ID can be an antenna panel ID on the network device side or an antenna panel ID on the terminal device side. When the antenna panel ID is an antenna panel ID on the network device side, the control resource set (CORESET) ID can also be used.

For example, the indication identifier includes the reference signal resource ID or resource set ID. The reference signal resource ID or resource set ID is configured to distinguish antenna panels. In the case that each cell (or TRP) has only one antenna panel, the reference signal resource ID or resource set ID can also be used to distinguish the cells (or TRPs). According to the reference signal resource ID or resource set ID, the corresponding antenna panel can be determined.

At block 303b, the network device sends a MAC signaling to the terminal device.

The MAC signaling carries an uplink beam information field, and the uplink beam information field is configured to activate target uplink beam information in the uplink beam information given by the uplink beam information set. The target uplink beam information is used by the antenna panel of the terminal device to perform PUCCH uplink sending.

At block 304a, the terminal device receives the MAC signaling.

At block 305, the terminal device determines the target uplink beam information in the uplink beam information set based on the uplink beam information field.

The uplink beam information field corresponds to one or more pieces of target uplink beam information.

After receiving the MAC signaling, the terminal device activates one or more pieces of uplink beam information in the uplink beam information set as the target uplink beam information based on the uplink beam information field carried by the MAC signaling.

At block 306, the terminal device determines an uplink sending beam direction corresponding to the target uplink beam information as a target uplink sending beam direction.

For scenario 1, since the uplink beam information field corresponds to one piece of target uplink beam information, the terminal device determines the target uplink sending beam direction according to one piece of target uplink beam information activated by the MAC signaling. When the terminal device supports uplink sending through only one antenna panel at the same time point, the terminal device uses the target uplink sending beam direction as the sending beam direction of the antenna panel 1 (the antenna panel that is performing uplink sending).

For example, the target uplink beam information activated by the MAC signaling is: uplink beam information #2. If the terminal device currently performs uplink sending through the antenna panel 2 only, the terminal device determines the uplink sending beam direction corresponding to the uplink beam information #2 as the target uplink sending beam direction of the antenna panel 2.

For scenario 2, since the uplink beam information field corresponds to multiple pieces of target uplink beam information, the terminal device determines the target uplink sending beam directions according to the multiple pieces of target uplink beam information activated by the MAC signaling. When the terminal device supports uplink sending through only one antenna panel at the same time point, the terminal device uses the multiple target uplink sending beam directions as the sending beam directions of the antenna panel 2 (the antenna panel that is performing uplink sending). The activated multiple pieces of target uplink beam information correspond to different time domain resources.

For example, the target uplink beam information activated by MAC signaling is: uplink beam information #2 and uplink beam information #3. Since there is only one antenna panel for transmission at the same time point, the uplink beam information #2 and the uplink beam information #3 correspond to different time domain resources. The terminal device determines the sending beam direction corresponding to the uplink beam information #2 (or the uplink beam information #3) as the current target uplink sending beam direction of the antenna panel according to the currently used time domain resource.

For scenario 3, since the uplink beam information field corresponds to multiple pieces of target uplink beam information, the terminal device determines multiple target uplink sending beam directions according to the multiple pieces of target uplink beam information activated by the MAC signaling. When the terminal device supports uplink sending through multiple antenna panels at the same time point, the terminal device uses the multiple target uplink sending beam directions as the sending beam directions of the multiple antenna panels. The activated multiple pieces of target uplink beam information correspond to the same time domain resource or different time domain resources.

For example, the target uplink beam information is: uplink beam information #1 and uplink beam information #2. The uplink beam information #1 corresponds to the antenna panel 1, and the uplink beam information #2 corresponds to the antenna panel 2. The terminal device determines both the uplink sending beam directions corresponding to the uplink beam information #1 and the uplink beam information #2 as the target uplink sending beam directions. Since the antenna panel 1 and the antenna panel 2 are used for uplink transmission at the same time point, the uplink beam information #1 and the uplink beam information #2 can correspond to the same time domain resource or correspond to different time domain resources. When corresponding to the same time domain resource, different frequency domain resources can be used, or the same frequency domain resource but different beam directions can be used.

In summary, in the method provided in the embodiment, the first downlink signaling is the MAC signaling. Since the uplink beam information in the uplink beam set given by RRC signaling can correspond to different antenna panels, the terminal device can determine one or more pieces of target uplink beam information in the uplink beam set based on the MAC signaling, and use the uplink sending beam direction corresponding to the target uplink beam information as the uplink sending beam directions of the multiple antenna panels.

In alternative implementations based on FIG. 3, FIG. 4, FIG. 5, and FIG. 6, FIG. 7 shows a flowchart of an uplink sending method provided by an embodiment of the present disclosure, which is applied to the terminal device and the network device as shown in FIG. 1. In the embodiment, the method includes the following.

At block 307, the terminal device sends antenna panel information to the network device.

The antenna panel information is configured to inform the network device of information on an antenna panel of the terminal device.

Optionally, the antenna panel information includes, but is not limited to at least one of: a number of antenna panels of the terminal device; information on whether simultaneous activation of a plurality of antennal panels of the terminal device is supported; information on whether simultaneous uplink sending through a plurality of activated antennal panels of the terminal device is supported; in response to simultaneous uplink sending through different antennal panels of the terminal device being not supported, a time point of switching between different antenna panels to perform the uplink sending; a time point of switching between different uplink sending beams of a same antenna panel of the terminal device.

For example, the terminal device is provided with two antenna panels, including: antenna panel 1 and antenna panel 2. The terminal device does not support simultaneous uplink sending through two antenna panels. The antenna panel information reported by the terminal device includes: switching time point 1. If the terminal device needs to switch the antenna panel for uplink sending, such as switching from the antenna panel 1 to the antenna panel 2, the switching time point 1 is required to perform the above-mentioned switching process.

For example, the antenna panel 1 of the terminal device is performing uplink sending, and the antenna panel information reported by the terminal device includes: switching time point 2. If the antenna panel 1 needs to be switched from the uplink sending beam 1 to the uplink sending beam 2, the switching time point 2 is required to perform the above-mentioned switching process.

Optionally, when the terminal device is in an idle state, a non-access stratum (NAS) signaling is used to send the antenna panel information to the core network, and the core network forwards it to the network device. When the terminal device is in a connected state, the network device requests the antenna panel information from the terminal device, and the terminal device uses a RRC signaling to send the antenna panel information to the network device.

At block 308, the network device receives the antenna panel information.

The network device determines an uplink activation capability or uplink sending capability of the multiple antenna panels of the terminal device according to the received antenna panel information.

Optionally, the network device sends a DCI signaling to the terminal device according to the received antenna panel information to determine the target uplink sending beam direction.

In summary, in the method provided in the embodiment, before the terminal device determines the uplink sending beam direction of the antenna panel, the terminal device needs to report its own antenna panel information to the network device, so that the network device can send the DCI signaling to the terminal device according to the situation of the terminal device.

It should be noted that the above method embodiments can be implemented separately or in combination, which is not limited in the present disclosure.

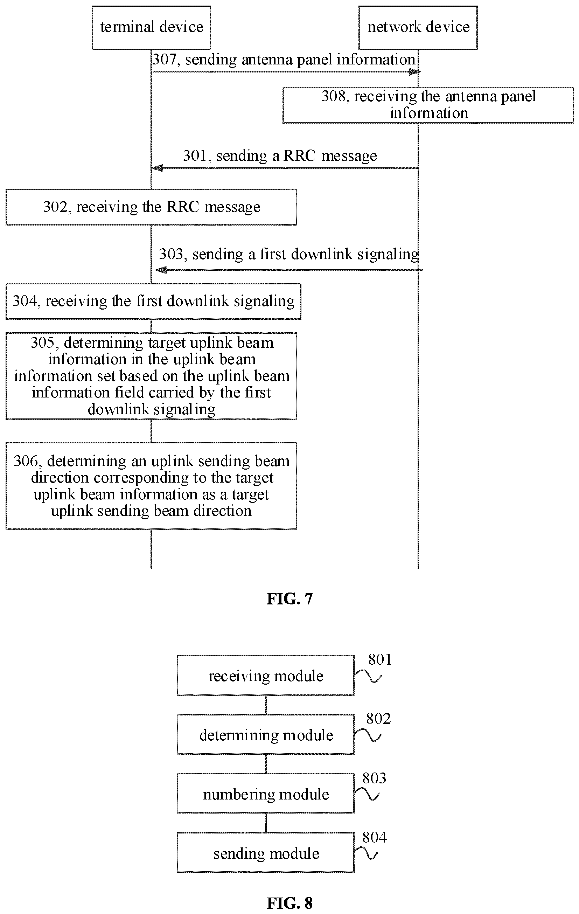

FIG. 8 is a block diagram illustrating an uplink sending apparatus according to an embodiment. The apparatus can be implemented as a terminal device, or a part of the terminal device. The apparatus includes a receiving module 801 and a determining module 802.

The receiving module 801 is configured to receive a radio resource control (RRC) message sent by a network device, in which the RRC message is configured to indicate an uplink beam information set, and a plurality of pieces of uplink beam information in the uplink beam information set correspond to a same antenna panel or different antenna panels of a terminal device.

The receiving module 801 is configured to receive a first downlink signaling sent by the network device, in which the first downlink signaling carries an uplink beam information field, and the uplink beam information field corresponds to one piece or a plurality of pieces of target uplink beam information.

The determining module 802 is configured to determine target uplink beam information in the uplink beam information set based on the uplink beam information field carried by the first downlink signaling.

The determining module 802 is configured to determine an uplink sending beam direction corresponding to the target uplink beam information as a target uplink sending beam direction.

In an alternative embodiment, the first downlink signaling is a downlink control information (DCI) signaling.

In an alternative embodiment, the uplink beam information field corresponds to one piece of target uplink beam information. The determining module 802 is configured to determine a plurality of pieces of activated candidate uplink beam information in the uplink beam information set. The determining module 802 is configured to determine the target uplink beam information in the plurality of pieces of activated candidate uplink beam information based on the uplink beam information field.

In an alternative embodiment, the terminal device supports uplink sending through only one antenna panel at a same time point.

In an alternative embodiment, the uplink beam information field corresponds to one piece or a plurality of pieces of target uplink beam information. The determining module 802 is configured to determine a plurality of pieces of activated candidate uplink beam information in the uplink beam information set. The determining module 802 is configured to obtain a mapping relationship carried by a media access control (MAC) signaling, in which the mapping relationship is configured to indicate a correspondence between a codepoint of the uplink beam information field and candidate uplink beam information. The determining module 802 is configured to query the mapping relationship to obtain the target uplink beam information based on the codepoint of the uplink beam information field.

In an alternative embodiment, the determining module 802 is configured to, in response to there being one piece of target uplink beam information, determine the uplink sending beam direction corresponding to the target uplink beam information as the target uplink sending beam direction. The determining module 802 is configured to, in response to there being a plurality of pieces of target uplink beam information, determine one or more uplink sending beam directions corresponding to one or more pieces of the plurality of pieces of target uplink beam information as one or more target uplink sending beam directions. The plurality of pieces of target uplink beam information correspond to a same time domain resource or different time domain resources.

In an alternative embodiment, the terminal device supports uplink sending through only one antenna panel at a same time point; or, the terminal device supports uplink sending through a plurality of antenna panels at a same time point.

In an alternative embodiment, the determining module 802 is configured to, in response to a number of the plurality of pieces of uplink beam information in the uplink beam information set being less than or equal to M, determine all the uplink beam information in the uplink beam information set as candidate uplink beam information, where M is a positive number. The receiving module 801 is configured to, in response to a number of the plurality of pieces of uplink beam information in the uplink beam information set being greater than M, receive a MAC signaling, and the determining module 802 is configured to activate M pieces of uplink beam information in the uplink beam information set as candidate uplink beam information based on the MAC signaling.

In an alternative embodiment, the apparatus further includes a numbering module 803, configured to: renumber the plurality of pieces of candidate uplink beam information in sequence starting from 0.

In an alternative embodiment, the first downlink signaling is a MAC signaling.

In an alternative embodiment, the uplink beam information field corresponds to one piece of target uplink beam information, and the terminal device supports uplink sending through only one antenna panel at a same time point.

In an alternative embodiment, the uplink beam information field corresponds to a plurality of pieces of target uplink beam information, and the terminal device supports uplink sending through only one antenna panel at a same time point, in which the plurality of pieces of target uplink beam information correspond to different time domain resources.

In an alternative embodiment, the uplink beam information field corresponds to a plurality of pieces of target uplink beam information, and the terminal device supports uplink sending through a plurality of antenna panels at a same time point, in which the plurality of pieces of target uplink beam information correspond to a same time domain resource or different time domain resources.

In an alternative embodiment, the uplink beam information in the uplink beam information set carries an indication identifier, and the indication identifier is configured to indicate an antenna panel corresponding to the uplink beam information. The indication identifier comprises at least one of a cell identification (ID), a transmission reception point ID, an antenna panel ID, a reference signal resource ID, or a resource set ID.

In an alternative embodiment, the apparatus further includes a sending module 804, configured to: send antenna panel information of the terminal device to the network device.

In an alternative embodiment, the antenna panel information includes at least one of: a number of antenna panels of the terminal device; information on whether simultaneous activation of a plurality of antennal panels of the terminal device is supported; information on whether simultaneous uplink sending through a plurality of activated antennal panels of the terminal device is supported; in response to simultaneous uplink sending through different antennal panels of the terminal device being not supported, a time point of switching between different antenna panels to perform the uplink sending; a time point of switching between different uplink sending beams of a same antenna panel of the terminal device.

In an alternative embodiment, the uplink beam information includes at least one of spatialrelationinfo, and a TCI state.

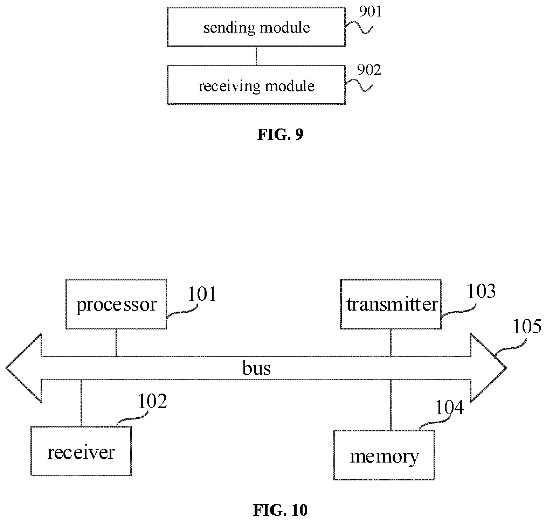

FIG. 9 is a block diagram illustrating an uplink sending apparatus according to an embodiment. The apparatus can be implemented as a network device, or a part of the network device. The apparatus includes a sending module 901.

The sending module 901 is configured to send a radio resource control (RRC) message to a terminal device, in which the RRC message is configured to indicate an uplink beam information set, and a plurality of pieces of uplink beam information in the uplink beam information set correspond to a same antenna panel or different antenna panels of the terminal device.

The sending module 901 is configured to send a first downlink signaling to the terminal device.

The first downlink signaling carries an uplink beam information field, the uplink beam information field is configured to determine target uplink beam information in the uplink beam information set, and the uplink beam information field corresponds to one piece or a plurality of pieces of target uplink beam information.

In an alternative embodiment, the first downlink signaling is a downlink control information (DCI) signaling.

In an alternative embodiment, the uplink beam information field corresponds to one piece of target uplink beam information.

In an alternative embodiment, the terminal device supports uplink sending through only one antenna panel at a same time point.

In an alternative embodiment, the sending module 901 is configured to, in response to a number of the plurality of pieces of uplink beam information in the uplink beam information set being greater than M, send a media access control (MAC) signaling to the terminal device, where M is a positive number. The MAC signaling is configured to activate M pieces of uplink beam information in the uplink beam information set as candidate uplink beam information.

In an alternative embodiment, the uplink beam information field corresponds to one piece or a plurality of pieces of target uplink beam information. The sending module 901 is configured to send a MAC signaling, in which the MAC signaling carries a mapping relationship, and the mapping relationship is configured to indicate a correspondence between a codepoint of the uplink beam information field and activated candidate uplink beam information.

In an alternative embodiment, the terminal device supports uplink sending through only one antenna panel at a same time point; or, the terminal device supports uplink sending through a plurality of antenna panels at a same time point.

In an alternative embodiment, in response to a number of the plurality of pieces of uplink beam information in the uplink beam information set being greater than M, the MAC signaling is configured to activate M pieces of uplink beam information in the uplink beam information set as candidate uplink beam information, where M is a positive number.

In an alternative embodiment, the first downlink signaling is a MAC signaling.

In an alternative embodiment, the uplink beam information field corresponds to one piece of target uplink beam information, and the terminal device supports uplink sending through only one antenna panel at a same time point.

In an alternative embodiment, the uplink beam information field corresponds to a plurality of pieces of target uplink beam information, and the terminal device supports uplink sending through only one antenna panel at a same time point, in which the plurality of pieces of target uplink beam information correspond to different time domain resources.

In an alternative embodiment, the uplink beam information field corresponds to a plurality of pieces of target uplink beam information, and the terminal device supports uplink sending through a plurality of antenna panels at a same time point, in which the plurality of pieces of target uplink beam information correspond to a same time domain resource or different time domain resources.

In an alternative embodiment, the uplink beam information in the uplink beam information set carries an indication identifier, and the indication identifier is configured to indicate an antenna panel corresponding to the uplink beam information. The indication identifier comprises at least one of a cell identification (ID), a transmission reception point ID, an antenna panel ID, a reference signal resource ID, or a resource set ID.

In an alternative embodiment, the apparatus further includes a receiving module 902, configured to: receive antenna panel information sent by the terminal device.

In an alternative embodiment, the antenna panel information includes at least one of a number of antenna panels of the terminal device; information on whether simultaneous activation of a plurality of antennal panels of the terminal device is supported; information on whether simultaneous uplink sending through a plurality of activated antennal panels of the terminal device is supported; in response to simultaneous uplink sending through different antennal panels of the terminal device being not supported, a time point of switching between different antenna panels to perform the uplink sending; a time point of switching between different uplink sending beams of a same antenna panel of the terminal device.

In an alternative embodiment, the uplink beam information includes at least one of spatialrelationinfo, and a TCI state.

FIG. 10 is a schematic diagram of a communication device (terminal device or network device) according to an embodiment of the disclosure. The communication device includes: a processor 101, a receiver 102, a transmitter 103, a memory 104, and a bus 105.

The processor 101 includes one or more processing cores, and the processor 101 executes various functional applications and information processing by running software programs and modules.

The receiver 102 and the transmitter 103 may be implemented as a communication component, which may be a communication chip.

The memory 104 is connected to the processor 101 through the bus 105.

The memory 104 may be configured to store at least one instruction, and the processor 101 may be configured to execute the at least one instruction to implement various steps in the above method embodiments.

Additionally, the memory 104 may be implemented by any type or combination of volatile or non-volatile storage devices including, but not limited to, magnetic or optical disks, electrically erasable programmable Read Only Memory (EEPROM), Erasable Programmable Read Only Memory (EPROM), Static Anytime Access Memory (SRAM), Read Only Memory (ROM), Magnetic Memory, Flash Memory, Programmable Read Only Memory (PROM) .

In an embodiment of the present disclosure, there is provided a computer-readable storage medium. The storage medium has at least one instruction, at least one program, and at least one set of codes or set of instructions stored therein. The at least one instruction, the at least one program, and the at least one set of codes or set of instructions are loaded and executed by a processor to implement the uplink sending method described above.

Those of ordinary skill in the art can understand that all or part of the steps in the above-mentioned embodiments can be completed by hardware, or by a program instructing relevant hardware to be completed. The program can be stored in a computer-readable storage medium. The storage medium mentioned can be a read-only memory, a magnetic disk or an optical disk, etc.

It should be understood that the disclosure is not limited to the precise structure described above and shown in the drawings, and various modifications and changes may be made without departing from its scope. The scope of the present disclosure is only limited by the appended claims.

## Claims

1. An uplink sending method, comprising:
receiving a radio resource control (RRC) message sent by a network device, wherein the RRC message is configured to indicate an uplink beam information set, and a plurality of pieces of uplink beam information in the uplink beam information set correspond to a same antenna panel or different antenna panels of a terminal device;
receiving a first downlink signaling sent by the network device, wherein the first downlink signaling carries an uplink beam information field, and the uplink beam information field corresponds to one piece or a plurality of pieces of target uplink beam information;
determining target uplink beam information in the uplink beam information set based on the uplink beam information field carried by the first downlink signaling; and
determining an uplink sending beam direction corresponding to the target uplink beam information as a target uplink sending beam direction.

2. The method of claim 1, wherein the first downlink signaling is a downlink control information (DCI) signaling.

3. The method of claim 2, wherein the uplink beam information field corresponds to one piece of target uplink beam information;
determining the target uplink beam information in the uplink beam information set based on the uplink beam information field carried by the first downlink signaling comprises:
determining a plurality of pieces of activated candidate uplink beam information in the uplink beam information set; and
determining the target uplink beam information in the plurality of pieces of activated candidate uplink beam information based on the uplink beam information field.

4. The method of claim 3, wherein the terminal device supports uplink sending through only one antenna panel at a same time point.

5. The method of claim 2, wherein the uplink beam information field corresponds to one piece or a plurality of pieces of target uplink beam information;
determining the target uplink beam information in the uplink beam information set based on the uplink beam information field carried by the first downlink signaling comprises:
determining a plurality of pieces of activated candidate uplink beam information in the uplink beam information set;
obtaining a mapping relationship carried by a media access control (MAC) signaling, wherein the mapping relationship is configured to indicate a correspondence between a codepoint of the uplink beam information field and candidate uplink beam information; and
querying the mapping relationship to obtain the target uplink beam information based on the codepoint of the uplink beam information field.

6. The method of claim 5, wherein determining the uplink sending beam direction corresponding to the target uplink beam information as the target uplink sending beam direction comprises:
in response to there being one piece of target uplink beam information, determining the uplink sending beam direction corresponding to the target uplink beam information as the target uplink sending beam direction;
in response to there being a plurality of pieces of target uplink beam information, determining one or more uplink sending beam directions corresponding to one or more pieces of the plurality of pieces of target uplink beam information as one or more target uplink sending beam directions;
wherein the plurality of pieces of target uplink beam information correspond to a same time domain resource or different time domain resources.

7. The method of claim 6, wherein,
the terminal device supports uplink sending through only one antenna panel at a same time point;
or, the terminal device supports uplink sending through a plurality of antenna panels at a same time point.

8. The method of claim 3 or 5, wherein determining the plurality of pieces of activated candidate uplink beam information in the uplink beam information set comprises:
in response to a number of the plurality of pieces of uplink beam information in the uplink beam information set being less than or equal to M, determining all the uplink beam information in the uplink beam information set as candidate uplink beam information, where M is a positive number;
in response to a number of the plurality of pieces of uplink beam information in the uplink beam information set being greater than M, receiving a MAC signaling and activating M pieces of uplink beam information in the uplink beam information set as candidate uplink beam information based on the MAC signaling.

9. The method of claim 8, further comprising:
renumbering the plurality of pieces of candidate uplink beam information in sequence starting from 0.

10. The method of claim 1, wherein the first downlink signaling is a MAC signaling.

11. The method of claim 10, wherein the uplink beam information field corresponds to one piece of target uplink beam information, and the terminal device supports uplink sending through only one antenna panel at a same time point.

12. The method of claim 10, wherein the uplink beam information field corresponds to a plurality of pieces of target uplink beam information, and the terminal device supports uplink sending through only one antenna panel at a same time point, wherein the plurality of pieces of target uplink beam information correspond to different time domain resources.

13. The method of claim 10, wherein the uplink beam information field corresponds to a plurality of pieces of target uplink beam information, and the terminal device supports uplink sending through a plurality of antenna panels at a same time point, wherein the plurality of pieces of target uplink beam information correspond to a same time domain resource or different time domain resources.

14. The method of any of claims 1-13, wherein,
the uplink beam information in the uplink beam information set carries an indication identifier, and the indication identifier is configured to indicate an antenna panel corresponding to the uplink beam information;
wherein the indication identifier comprises at least one of a cell identification (ID), a transmission reception point ID, an antenna panel ID, a reference signal resource ID, or a resource set ID.

15. The method of any of claims 1-13, further comprising:
sending antenna panel information of the terminal device to the network device.

16. The method of claim 15, wherein the antenna panel information comprises at least one of:
a number of antenna panels of the terminal device;
information on whether simultaneous activation of a plurality of antennal panels of the terminal device is supported;
information on whether simultaneous uplink sending through a plurality of activated antennal panels of the terminal device is supported;
in response to simultaneous uplink sending through different antennal panels of the terminal device being not supported, a time point of switching between different antenna panels to perform the uplink sending;
a time point of switching between different uplink sending beams of a same antenna panel of the terminal device.

17. The method of any of claims 1-13, wherein the uplink beam information comprises at least one of
spatial relation information, or a transmission configuration indication (TCI) state.

18. An uplink sending method, comprising:
sending a radio resource control (RRC) message to a terminal device, wherein the RRC message is configured to indicate an uplink beam information set, and a plurality of pieces of uplink beam information in the uplink beam information set correspond to a same antenna panel or different antenna panels of the terminal device; and
sending a first downlink signaling to the terminal device;
wherein the first downlink signaling carries an uplink beam information field, the uplink beam information field is configured to determine target uplink beam information in the uplink beam information set, and the uplink beam information field corresponds to one piece or a plurality of pieces of target uplink beam information.

19. The method of claim 18, wherein the first downlink signaling is a downlink control information (DCI) signaling.

20. The method of claim 19, wherein the uplink beam information field corresponds to one piece of target uplink beam information.

21. The method of claim 20, wherein the terminal device supports uplink sending through only one antenna panel at a same time point.

22. The method of claim 20, further comprising:
in response to a number of the plurality of pieces of uplink beam information in the uplink beam information set being greater than M, sending a media access control (MAC) signaling to the terminal device, where M is a positive number;
wherein the MAC signaling is configured to activate M pieces of uplink beam information in the uplink beam information set as candidate uplink beam information.

23. The method of claim 19, wherein the uplink beam information field corresponds to one piece or a plurality of pieces of target uplink beam information;
the method further comprises:
sending a MAC signaling, wherein the MAC signaling carries a mapping relationship, and the mapping relationship is configured to indicate a correspondence between a codepoint of the uplink beam information field and activated candidate uplink beam information.

24. The method of claim 23, wherein,
the terminal device supports uplink sending through only one antenna panel at a same time point;
or, the terminal device supports uplink sending through a plurality of antenna panels at a same time point.

25. The method of claim 23, wherein,
in response to a number of the plurality of pieces of uplink beam information in the uplink beam information set being greater than M, the MAC signaling is configured to activate M pieces of uplink beam information in the uplink beam information set as candidate uplink beam information, where M is a positive number.

26. The method of claim 18, wherein the first downlink signaling is a MAC signaling.

27. The method of claim 26, wherein the uplink beam information field corresponds to one piece of target uplink beam information, and the terminal device supports uplink sending through only one antenna panel at a same time point.

28. The method of claim 26, wherein the uplink beam information field corresponds to a plurality of pieces of target uplink beam information, and the terminal device supports uplink sending through only one antenna panel at a same time point, wherein the plurality of pieces of target uplink beam information correspond to different time domain resources.

29. The method of claim 26, wherein the uplink beam information field corresponds to a plurality of pieces of target uplink beam information, and the terminal device supports uplink sending through a plurality of antenna panels at a same time point, wherein the plurality of pieces of target uplink beam information correspond to a same time domain resource or different time domain resources.

30. The method of any of claims 18-29, wherein,
the uplink beam information in the uplink beam information set carries an indication identifier, and the indication identifier is configured to indicate an antenna panel corresponding to the uplink beam information;
wherein the indication identifier comprises at least one of a cell identification (ID), a transmission reception point ID, an antenna panel ID, a reference signal resource ID, or a resource set ID.

31. The method of any of claims 18-29, further comprising:
receiving antenna panel information sent by the terminal device.

32. The method of claim 31, wherein the antenna panel information comprises at least one of:
a number of antenna panels of the terminal device;
information on whether simultaneous activation of a plurality of antennal panels of the terminal device is supported;
information on whether simultaneous uplink sending through a plurality of activated antennal panels of the terminal device is supported;
in response to simultaneous uplink sending through different antennal panels of the terminal device being not supported, a time point of switching between different antenna panels to perform the uplink sending;
a time point of switching between different uplink sending beams of a same antenna panel of the terminal device.

33. The method of any of claims 18-29, wherein the uplink beam information comprises at least one of
spatial relation information, or a transmission configuration indication (TCI) state.

34. An uplink sending apparatus, comprising a receiving module and a determining module, wherein,
the receiving module is configured to receive a radio resource control (RRC) message sent by a network device, wherein the RRC message is configured to indicate an uplink beam information set, and a plurality of pieces of uplink beam information in the uplink beam information set correspond to a same antenna panel or different antenna panels of a terminal device;
the receiving module is configured to receive a first downlink signaling sent by the network device, wherein the first downlink signaling carries an uplink beam information field, and the uplink beam information field corresponds to one piece or a plurality of pieces of target uplink beam information;
the determining module is configured to determine target uplink beam information in the uplink beam information set based on the uplink beam information field carried by the first downlink signaling;
the determining module is configured to determine an uplink sending beam direction corresponding to the target uplink beam information as a target uplink sending beam direction.

35. The apparatus of claim 34, wherein the first downlink signaling is a downlink control information (DCI) signaling.

36. The apparatus of claim 35, wherein the uplink beam information field corresponds to one piece of target uplink beam information;
the determining module is configured to determine a plurality of pieces of activated candidate uplink beam information in the uplink beam information set;
the determining module is configured to determine the target uplink beam information in the plurality of pieces of activated candidate uplink beam information based on the uplink beam information field.

37. The apparatus of claim 36, wherein the terminal device supports uplink sending through only one antenna panel at a same time point.

38. The apparatus of claim 35, wherein the uplink beam information field corresponds to one piece or a plurality of pieces of target uplink beam information;
the determining module is configured to determine a plurality of pieces of activated candidate uplink beam information in the uplink beam information set;
the determining module is configured to obtain a mapping relationship carried by a media access control (MAC) signaling, wherein the mapping relationship is configured to indicate a correspondence between a codepoint of the uplink beam information field and candidate uplink beam information;
the determining module is configured to query the mapping relationship to obtain the target uplink beam information based on the codepoint of the uplink beam information field.

39. The apparatus of claim 38, wherein,
the determining module is configured to, in response to there being one piece of target uplink beam information, determine the uplink sending beam direction corresponding to the target uplink beam information as the target uplink sending beam direction;
the determining module is configured to, in response to there being a plurality of pieces of target uplink beam information, determine one or more uplink sending beam directions corresponding to one or more pieces of the plurality of pieces of target uplink beam information as one or more target uplink sending beam directions;
wherein the plurality of pieces of target uplink beam information correspond to a same time domain resource or different time domain resources.

40. The apparatus of claim 39, wherein,
the terminal device supports uplink sending through only one antenna panel at a same time point;
or, the terminal device supports uplink sending through a plurality of antenna panels at a same time point.

41. The apparatus of claim 36 or 38, wherein,
the determining module is configured to, in response to a number of the plurality of pieces of uplink beam information in the uplink beam information set being less than or equal to M, determine all the uplink beam information in the uplink beam information set as candidate uplink beam information, where M is a positive number;
the receiving module is configured to, in response to a number of the plurality of pieces of uplink beam information in the uplink beam information set being greater than M, receive a MAC signaling and the determining module is configured to activate M pieces of uplink beam information in the uplink beam information set as candidate uplink beam information based on the MAC signaling.

42. The apparatus of claim 41, further comprising a numbering module, configured to:
renumber the plurality of pieces of candidate uplink beam information in sequence starting from 0.

43. The apparatus of claim 34, wherein the first downlink signaling is a MAC signaling.

44. The apparatus of claim 43, wherein the uplink beam information field corresponds to one piece of target uplink beam information, and the terminal device supports uplink sending through only one antenna panel at a same time point.

45. The apparatus of claim 43, wherein the uplink beam information field corresponds to a plurality of pieces of target uplink beam information, and the terminal device supports uplink sending through only one antenna panel at a same time point, wherein the plurality of pieces of target uplink beam information correspond to different time domain resources.

46. The apparatus of claim 43, wherein the uplink beam information field corresponds to a plurality of pieces of target uplink beam information, and the terminal device supports uplink sending through a plurality of antenna panels at a same time point, wherein the plurality of pieces of target uplink beam information correspond to a same time domain resource or different time domain resources.

47. The apparatus of any of claims 34-46, wherein,
the uplink beam information in the uplink beam information set carries an indication identifier, and the indication identifier is configured to indicate an antenna panel corresponding to the uplink beam information;
wherein the indication identifier comprises at least one of a cell identification (ID), a transmission reception point ID, an antenna panel ID, a reference signal resource ID, or a resource set ID.

48. The apparatus of any of claims 34-46, further comprising a sending module, configured to:
send antenna panel information of the terminal device to the network device.

49. The apparatus of claim 48, wherein the antenna panel information comprises at least one of
a number of antenna panels of the terminal device;
information on whether simultaneous activation of a plurality of antennal panels of the terminal device is supported;
information on whether simultaneous uplink sending through a plurality of activated antennal panels of the terminal device is supported;
in response to simultaneous uplink sending through different antennal panels of the terminal device being not supported, a time point of switching between different antenna panels to perform the uplink sending;
a time point of switching between different uplink sending beams of a same antenna panel of the terminal device.

50. The apparatus of any of claims 34-46, wherein the uplink beam information comprises at least one of
spatial relation information, or a transmission configuration indication (TCI) state.

51. An uplink sending apparatus, comprising a sending module, wherein,
the sending module is configured to send a radio resource control (RRC) message to a terminal device, wherein the RRC message is configured to indicate an uplink beam information set, and a plurality of pieces of uplink beam information in the uplink beam information set correspond to a same antenna panel or different antenna panels of the terminal device; and
the sending module is configured to send a first downlink signaling to the terminal device; wherein the first downlink signaling carries an uplink beam information field, the uplink beam information field is configured to determine target uplink beam information in the uplink beam information set, and the uplink beam information field corresponds to one piece or a plurality of pieces of target uplink beam information.

52. The apparatus of claim 51, wherein the first downlink signaling is a downlink control information (DCI) signaling.

53. The apparatus of claim 52, wherein the uplink beam information field corresponds to one piece of target uplink beam information.

54. The apparatus of claim 53, wherein the terminal device supports uplink sending through only one antenna panel at a same time point.

55. The apparatus of claim 53, wherein,
the sending module is configured to, in response to a number of the plurality of pieces of uplink beam information in the uplink beam information set being greater than M, send a media access control (MAC) signaling to the terminal device, where M is a positive number;
wherein the MAC signaling is configured to activate M pieces of uplink beam information in the uplink beam information set as candidate uplink beam information.

56. The apparatus of claim 52, wherein the uplink beam information field corresponds to one piece or a plurality of pieces of target uplink beam information;
the sending module is configured to send a MAC signaling, wherein the MAC signaling carries a mapping relationship, and the mapping relationship is configured to indicate a correspondence between a codepoint of the uplink beam information field and activated candidate uplink beam information.

57. The apparatus of claim 56, wherein,
the terminal device supports uplink sending through only one antenna panel at a same time point;
or, the terminal device supports uplink sending through a plurality of antenna panels at a same time point.

58. The apparatus of claim 56, wherein,
in response to a number of the plurality of pieces of uplink beam information in the uplink beam information set being greater than M, the MAC signaling is configured to activate M pieces of uplink beam information in the uplink beam information set as candidate uplink beam information, where M is a positive number.

59. The apparatus of claim 51, wherein the first downlink signaling is a MAC signaling.

60. The apparatus of claim 59, wherein the uplink beam information field corresponds to one piece of target uplink beam information, and the terminal device supports uplink sending through only one antenna panel at a same time point.

61. The apparatus of claim 59, wherein the uplink beam information field corresponds to a plurality of pieces of target uplink beam information, and the terminal device supports uplink sending through only one antenna panel at a same time point, wherein the plurality of pieces of target uplink beam information correspond to different time domain resources.

62. The apparatus of claim 59, wherein the uplink beam information field corresponds to a plurality of pieces of target uplink beam information, and the terminal device supports uplink sending through a plurality of antenna panels at a same time point, wherein the plurality of pieces of target uplink beam information correspond to a same time domain resource or different time domain resources.

63. The apparatus of any of claims 51-62, wherein,
the uplink beam information in the uplink beam information set carries an indication identifier, and the indication identifier is configured to indicate an antenna panel corresponding to the uplink beam information;
wherein the indication identifier comprises at least one of a cell identification (ID), a transmission reception point ID, an antenna panel ID, a reference signal resource ID, or a resource set ID.

64. The apparatus of any of claims 51-62, further comprising a receiving module, configured to:
receive antenna panel information sent by the terminal device.

65. The apparatus of claim 64, wherein the antenna panel information comprises at least one of
a number of antenna panels of the terminal device;
information on whether simultaneous activation of a plurality of antennal panels of the terminal device is supported;
information on whether simultaneous uplink sending through a plurality of activated antennal panels of the terminal device is supported;
in response to simultaneous uplink sending through different antennal panels of the terminal device being not supported, a time point of switching between different antenna panels to perform the uplink sending;
a time point of switching between different uplink sending beams of a same antenna panel of the terminal device.

66. The apparatus of any of claims 51-62, wherein the uplink beam information comprises at least one of
spatial relation information, or a transmission configuration indication (TCI) state.

67. A terminal device, comprising:
a processor;
a transceiver coupled to the processor;
a memory configured to store instructions executable by the processor;
wherein the processor is configured to load and execute the instructions to perform the uplink sending method of any of claims 1-17.

68. A network device, comprising:
a processor;
a transceiver coupled to the processor;
a memory configured to store instructions executable by the processor;
wherein the processor is configured to load and execute the instructions to perform the uplink sending method of any of claims 18-33.

69. A computer-readable storage medium having executable instructions stored therein, wherein the executable instructions are loaded and executed by a processor to perform the uplink sending method of any of claims 1-33.
